# EUROPEAN PATENT SPECIFICATION

(11) **EP 3 351 973 B1**
(45) Date of publication and mention of the grant of the patent: **04.03.2020**
(21) Application number: 18152411.7
(22) Date of filing: 18.01.2018
(51) Int. Cl.: G01V 1/38, G01V 9/00

(54) **LONG-TERM SEABED-BASED MULTI-POINT IN-SITU OBSERVATION SYSTEM**
LANGFRISTIGES, AUF DEM MEERESBODEN BASIERENDES MEHRPUNKT-IN-SITU-BEOBACHTUNGSSYSTEM
SYSTÈME D'OBSERVATION IN SITU MULTIPOINT À LONG TERME BASÉ SUR LES FONDS MARINS

(30) Priority: 18.01.2017 CN 201710036787
(43) Date of publication of application: 25.07.2018
(73) Proprietor: Qingdao Institute Of Marine Geology, Qingdao City, Shandong 266000 (CN)
(72) Inventor: SUN, Zhilei, Qingdao City, Shandong (CN); GUO, Lei, Qingdao City, Shandong (CN); ZHANG, Xilin, Qingdao City, Shandong (CN); CAO, Hong, Qingdao City, Shandong (CN); ZHANG, Xianrong, Qingdao City, Shandong (CN); GENG, Wei, Qingdao City, Shandong (CN); XU, Cuiling, Qingdao City, Shandong (CN)
(74) Representative: Cabinet Beau de Loménie

(56) References cited:
- WO-A1-2016/110207
- CN-A- 103 713 326
- CN-A- 105 235 839
- KIMINORI SHITASHIMA ET AL: "Strategies for Detection and Monitoring of CO2 Leakage in Sub-seabed CCS", ENERGY PROCEDIA, vol. 37, 1 January 2013 (2013-01-01), pages 4283-4290, XP055478768, NL ISSN: 1876-6102, DOI: 10.1016/j.egypro.2013.06.331

## Description

### BACKGROUND OF THE INVENTION

### Technical Field

The present invention relates to a long-term seabed-based multi-point in-situ observation system, belonging to the technical field of a marine observation system.

### Description of Related Art

Marine resources are an important constitutional part of the national maritime rights and interests. Fighting for resources such as deep-sea petroleum and natural gas hydrates has become an international resource focus. In the process of exploiting seabed natural gas hydrates, the hydrates are spontaneously decomposed due to factors such as the temperature, pressure and external interference to generate various side products such as CH₄, H₂, H₂S and O₂, and may result in serious influences on the stability of the seabed, oceans, engineering infrastructure, oceanic and atmospheric environment. Therefore, effective, comprehensive and long-term monitoring of the exploitation process of the natural gas hydrates has a great significance for promotion on the exploration and exploitation of the hydrate resources and on the investigation and evaluation of the relevant environmental effects.

At present, approaches for monitoring, detecting and observing the decomposition process of the natural gas hydrates mainly include marine geophysical prospecting, subsurface buoy observation, sampling analysis, seabed-based observation, etc. The marine geophysical prospecting methods can be classified into seawater environment detection represented by approaches such as multi-beam detection, and the seabed deposit environment detection represented by earthquake and shallow profiling approaches. The physical detection methods lacks of time continuity and has low accuracy, mainly focus on exploration, and have difficulties in realizing long-term continuous observation. Subsurface buoy observation can obtain a huge amount of data of a seawater environment section and has good continuity and a good vertical data distribution density, but when it is applied to the observation of the decomposition process of the hydrates in the seabed deposits, the observation effect in the seawater environment is relatively lagged. By using the sampling analysis method, deposit samples in a range which is wide and deep enough can be obtained, but this method fails to meet the real-time observation requirements, fails to obtain dynamic change process, and also generates inevitable disturbance on samples to seriously affect the analysis result. Relatively speaking, seabed-based observation method can ensure long-term observation on the seawater and the deposits and is the optimal method.

Seabed-based observation has been used for a long time. University of Washington of the USA was the first one to use a seabed-based tripod to observe and study the water-sediment movement on the bottom boundary layer in the Puget Sound tideway (1965). Since then, the United States Geological Survey, Virginia Institutes of Marine Science, the National Oceanic and Atmospheric Administration of the United States, etc. respectively established individual seabed-based observation systems, and organized and participated in a series of large-scale observation projects. In addition, Oceanscience, Technicap, MSI, etc. all industrialized the mature technology of the bottom-supported platforms. A series of simple and practical seabed observation platforms such as Sea Spider, CAGE ENPEHD, had been launched on the market in succession. In China, the Ocean University of China, Sun Yat-Sen University, East China Normal University, Institute of Oceanology of the Chinese Academy of Sciences, National Ocean Technology Center, Third Institute of Oceanography, State Oceanic Administration, etc. successively made successes in research, manufacture, promotion and application of the bottom-supported platforms. State Key Laboratory of Marine Geology at Tongji University cooperated with the United States Geological Survey in research and manufacture of the "freely descending tripod", used a lot of seabed apparatuses to observe the continuous time change sequences of the bottom ocean current and the deposit movement, and studied the dynamic processes of the bottom ocean current distribution and deposit movement in the northeast part of the South China Sea.

However, the seabed-based observation systems are all focused on observation of the oceanic dynamic parameters, such as temperature, salinity, wave, tide, ocean current, suspended sediment, gravity, magnetism, chlorophyll, DO, pH value, Co, methane, nutritive salt, H₂S, etc., and cannot detect the interior of the seabed deposits. The Ocean University of China formally started to research and manufacture "long-term in-situ complicated deep-sea engineering geological observation equipment" in 2015. The equipment can not only perform a comprehensive observation on the seawater environment, but also carry out a long-term observation on the specific resistance, sound wave and pore water pressure in the seabed deposits. However, the equipment is still under research and manufacture, and merely performs static fixed-point observation.

KIMINORI SHITASHIMA ET AL: "Strategies for Detection and Monitoring of CO2 Leakage in Sub-seabed CCS", for example, discloses a four layered long-term based multi-point in-situ observation system. The system consists of a buoy equipped with CO2/pH and depth sensors. WO 2016/110207 discloses a self-floating heat flow long-term observation station. CN 103 713 326 discloses an ocean bottom seismograph anti-dragging bed base, has seat bottom frame connected with cabin, flexible connecting device connected with distributing device, U-type side ring connected with floating body, and rope connected with rope cabin. CN 105 235 839 discloses a self-floating preventing seabed base observation platform, including platform hull and the support being arranged in platform hull, monitoring device and acoustic releaser are installed on the support, the platform hull includes upper platform and lower floor's platform, the support is arranged in upper platform, the upper platform is detachably connected by mechanical decoupling device with lower floor's platform.

The petroleum and natural gas hydrates at the seabed form an active diffusion field which diffuses from the inside to the outside and becomes smaller gradually in a limited range due to leak or decomposition. In particular in a relatively stable deep-sea environment, the position and distance of a source, and the diffusion processes of all observed elements and the leak/decomposing amount of the source can be determined according to the distribution characteristics of the diffusion field through multi-point detection merely in an active field in a small range, which has an important practical significance and a high research value. However, obviously, it fails to perform a long-term observation on the leak or decomposition process of the petroleum and natural gas hydrates with the current equipment.

### BRIEF SUMMARY OF THE INVENTION

One objective of the present invention is to provide a long-term seabed-based multi-point in-situ observation system which can perform high-accuracy, three-dimensional observation on the deposits in the coverage at multiple points and can perform located deposit sampling with high accuracy.

The present invention relates to a long-term seabed-based multi-point in-situ observation system which comprises a platform frame, a buoyant material, an underwater acoustic communication device, a beacon, a monitoring chamber, a control chamber, a release control chamber, a central revolving table, ballasting weights and a microelectrode probing system; the platform frame has a cylindrical main body with a total of four layers from the top down; the buoyant material, the underwater acoustic communication device and the beacon are installed on the first layer; the monitoring chamber, the control chamber and the release control chamber are installed on the second layer; the central revolving table is installed on the third layer; and the ballasting weights are installed on the fourth layer;
wherein monitoring chamber on the second layer is internally equipped with an attitude sensor and a depth meter, the control chamber is internally equipped with an underwater control and data acquisition system, the release control chamber is internally equipped with an underwater acoustic releaser;
wherein the central revolving table is installed on the third layer, including a revolving guide rail, a revolving disc, the microelectrode probing system and an expanding mechanism, the central revolving table is provided with the circumferential revolving guide rail, the revolving disc is disposed in the center of the revolving guide rail and is capable of sliding along the revolving guide rail, the revolving disc is coupled to be driven by a servo motor I; wherein the revolving disc is radially formed with a sliding chute, the microelectrode probing system is capable of sliding in the sliding chute under the control of the expanding mechanism, the expanding mechanism comprises a servo motor II and a screw II, the servo motor II is configured to drive the screw II to rotate, and the screw II is in a threaded connection with a guide sleeve which is fixed on the microelectrode probing system.

The observation system controls the revolving disc to rotate through the servo motor, and controls the microelectrode probing system to slide through the expanding mechanism, capable of realizing revolving and locating with any radius in a range of 360°, and driving the microelectrode probing system to realize controllable located detection/ sampling.

Further, the platform frame of the observation system may be made of the 316L stainless steel material.

Further, the microelectrode probing system may be capable of moving up and down under the control of a lifting mechanism; the lifting mechanism may include a servo motor III and a screw III; the servo motor III may be configured to drive the screw III to rotate; and the screw III may be in a threaded connection with a base of the microelectrode probing system.

Much further, in combination with the microelectrode features of high response speed, low stirring sensitivity and high space resolution ratio, a vertical lifting mechanism may be designed with a locating accuracy of 1mm.

Further, the revolving disc may also be provided with a deposit sampler for sampling the observed deposits.

Further, to facilitate installation, the buoyant material may be designed to include 4-8 equal sections, and the combined shape and volume may be matched with those of the platform frame. The underwater acoustic releaser opens rope control hooks, and then ballasting weights can be abandoned. After the ballasting weights are abandoned, the buoyant material can help the platform to float on the water level.

Further, the microelectrode probing system may includes a base and a static CPT probe and eight microelectrodes that may be disposed on the base, the static cone penetration test probe may be disposed in the center of the base; the eight microelectrodes may be arranged around the static cone penetration test probe; the static cone penetration test probe may be set at a distance of 3-5cm from each one of the microelectrodes. If the distance is too small, the static CPT probe could occupy the space of a tested medium, which may affect the measurement result of the microelectrode. If the distance is too large, the effect of microelectrode protection at the detected threshold point could be greatly reduced. The length of the conical tip of the static cone penetration test probe may be 4-8cm greater than the conical tip length of the microelectrode. With the length difference, it can be ensured that the static CPT probe touches the deposits with unknown strength first in the process of penetrating the deposits, thus protecting the microelectrode; if the length difference was too large, it may fail to ensure the penetration depth. The eight microelectrodes (24) may be respectively configured to detect the CH₄, O₂, pH, Redox, H₂, H₂S, NO and NO₂ indexes.

The microelectrode may have relatively low mechanical strength. Therefore, in order to prevent damage in the process of penetrating through the deposits, the base of the microelectrode probing system may be equipped with a set of deep-water static CPT probe which is longer than the microelectrode so as to measure the variation of the strength of the deposits while the microelectrode is inserted down. Repeated breaking tests may be carried out on a microelectrode mold to obtain the limiting breaking strength of the respective microelectrode. Providing that the minimum value of the limiting breaking strength of the respective microelectrode is S, the threshold value of the static cone penetration test (CPT) can be set according to the value S. The threshold value of the static CPT can be set as 0.7-0.9S. When the conical tip resistance detected by the static CPT probe is greater than or equal to the threshold value of the static CPT, penetration may be stopped to protect the microelectrode from being damaged, thus realizing reliable protection on the microelectrode in the in-situ observation process. The microelectrode group and the static CPT probe can be combined to set the limiting threshold value, thus ensuring penetration depth and device safety.

The present invention can further enhance the response time and resolution of the microelectrode measurement. High-accuracy and high-resolution multi-parameter detection data may be obtained through further improving the signal amplification and data acquisition technologies.

Another objective of the present invention is to provide a control system for the long-term seabed-based multi-point in-situ observation system. The control system may include a deck unit and an underwater unit (underwater control and data acquisition control system);
wherein the deck unit may include a main console, a data memory I, a human-machine interaction unit, a beacon locating unit, an underwater acoustic communication unit and an acoustic release unit, the main console may be respectively connected with the data memory I, the human-machine interaction unit, the beacon locating unit, the underwater acoustic communication unit and the acoustic release unit;
wherein the underwater control and data acquisition system may include a main control system, the beacon, the underwater acoustic communication device, the acoustic releaser, a data memory II, the servo motor I, the revolving disc, the servo motor II, the screw II, the servo motor III, the screw III, the microelectrode probing system, the data acquisition unit, the deposit sampler, the depth meter and the altitude sensor; wherein the main control system may be respectively connected with the beacon, the underwater acoustic communication device, the acoustic releaser, the data memory II, the servo motor I, the servo motor II, the servo motor III, the data acquisition unit, the depth meter and the altitude sensor; the servo motor I, the servo motor II and the servo motor III may be respectively connected with the revolving disc, the screw II and the screw III to drive the microelectrode probing system and the deposit sampler so as to drive the microelectrode probing system and the deposit sampler, the microelectrode probing system may be connected with the data acquisition unit;

The beacon locating unit may be in a wireless connection with the beacon, the underwater acoustic communication unit may be in a wireless connection with the underwater acoustic communication device, and the acoustic release unit may be in a wireless connection with the acoustic releaser.

The underwater control and data acquisition system may be electrically powered by batteries, and may include two parts, namely software and hardware. The underwater control and data acquisition system may mainly control the revolving location of the central revolving table, the expanding location and vertical lifting location of the microelectrode probing system and the deposit sampler, acquire data from the detection instruments such as the respective microelectrode, depth meter and altitude sensor, store the acquired data into the data memory II, and at the same time, transmit the data into the deck unit through the underwater acoustic communication device. The underwater acoustic communication device may also transmit parameters such as the underwater state of the platform and the data acquired by the instruments to a deck receiving unit. The acoustic releaser may receive a release signal from the deck unit and then open hooks such that the hooks are separated from the ballasting weights. Thus, the long-term seabed-based multi-point in-situ observation system is driven by the buoyant material to float upward to the sea surface. After the long-term seabed-based multi-point in-situ observation system floats on the sea surface, the beacon may send a GPS real-time location to instruct ships on the seal level to quickly lock the actual location and drifting direction of the long-term seabed-based multi-point in-situ observation system and to smoothly complete tracking and salvage and recovery at sea surface.

Aiming at the leak or decomposition process of the seabed petroleum and natural gas hydrates, the present invention may acquire the dynamic distribution of the geochemical indexes in the three-dimensional space of the seabed deposits in the observed zone through long-term observation and deposit sampling, then analyze and obtain information such as the source position and diffusion process of the active diffusion field, and provide important data supports to the evaluation on the oceanic environment effects in the process of petroleum leak and hydrate decomposition, thus providing support and services for the implementation of major projects such as seabed petroleum exploitation, and trial exploitation of the natural gas hydrates.

The present invention has the following advantages:
1. On the basis of the traditional seabed base, though the revolving mechanism and the expanding mechanism of the central revolving platform, the present invention can effectively realize an accurate multi-point positioning function, and then acquire the data of multiple detecting points in the detected zone upon demands, and finally analyze and obtain the space distribution information of an active diffusion field.
2. The lifting mechanism is introduced to the central revolving platform, realizing the penetration and pull-out function of the probe, and then the multi-point detection can be further developed into three-dimensional detection. Therefore, the planar active diffusion field of the seabed surface can be expanded into a three-dimensional active diffusion field, thus ensuring the intuition and reliability of the final result.

### BRIEF DESCRIPTION OF THE SEVERAL VIEWS OF THE DRAWINGS

FIG. 1 is a structural view of a long-term seabed-based multi-point in-situ observation system in embodiments 1-2;
FIG. 2 is a structural view of a central revolving structure in embodiments 1-2;
FIG. 3 is a structural view of a microelectrode probing system in embodiment 2;
FIG. 4 is a structural view of a microelectrode probing system in embodiment 2;
FIG. 5 is a schematic view of a control system in embodiments 1-2;
FIG. 6 is a structural view of the control system in embodiments 1-2;
FIG. 7 is a schematic view of an active diffusion field detection method of the observation system in embodiments 1-2;

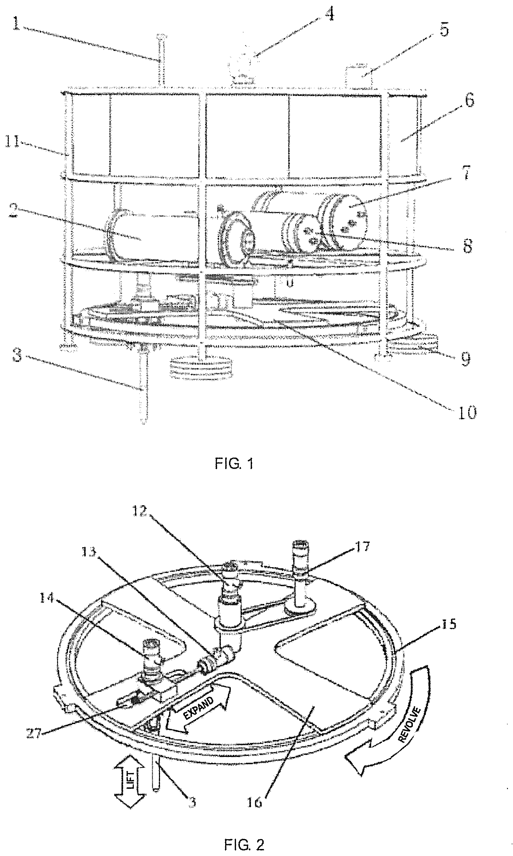

In FIG. 1-FIG. 7: 1- beacon; 2- monitoring chamber; 3-microelectrode probing system; 4-lifting ring; 5-underwater acoustic communication device; 6-buoyant material; 7-control chamber; 8-release control chamber; 9-ballasting weight; 10-central revolving table; 11-platform frame; 12-servo motor I; 13-servo motor II; 14-servo motor III; 15-revolving guide rail; 16-revolving disc; 17-deposit sampler; 18-deck unit; 19- seal level; 20- long-term seabed-based multi-point in-situ observation system; 21; seabed surface; 22-screw III; 23-base; 24-microelectrode; 25-static cone penetration test probe; 26-screw II; 27- sliding chute; 28- detecting point; 29-detected zone; 30-diffusion field; 31-diffusion point.

### DETAILED DESCRIPTION OF THE INVENTION

To make the objectives, technical solution and advantages of the present invention more clear, the present invention is described in further detail with reference to the following attached drawings and embodiments.

### Embodiment 1

A long-term seabed-based multi-point in-situ observation system as shown in FIG. 1 includes a platform frame 11, a buoyant material 6, an underwater acoustic communication device 5, a beacon 1, a monitoring chamber 2, a control chamber 7, a release control chamber 8, a central revolving table 10, ballasting weights 9 and a microelectrode probing system 3. The platform frame 11 has a cylindrical main body which includes four layers from the top down.

The buoyant material 6, the underwater acoustic communication device 5, the beacon 1 and the lifting ring 4 are installed on the first layer, wherein the buoyant material 6 is designed with six equal sections for facilitating installation and is placed in the frame, and the underwater acoustic communication device 5, the beacon 1 and the lifting ring 4 are all disposed on the top of the platform frame 11.

The monitoring chamber 2, the control chamber 7 and the release control chamber 8 are installed on the second layer. The monitoring chamber 2 is internally equipped with an attitude sensor and an depth meter; the control chamber 7 is internally equipped with an underwater control and data acquisition system; and the release control chamber 8 is internally equipped with an underwater acoustic releaser.

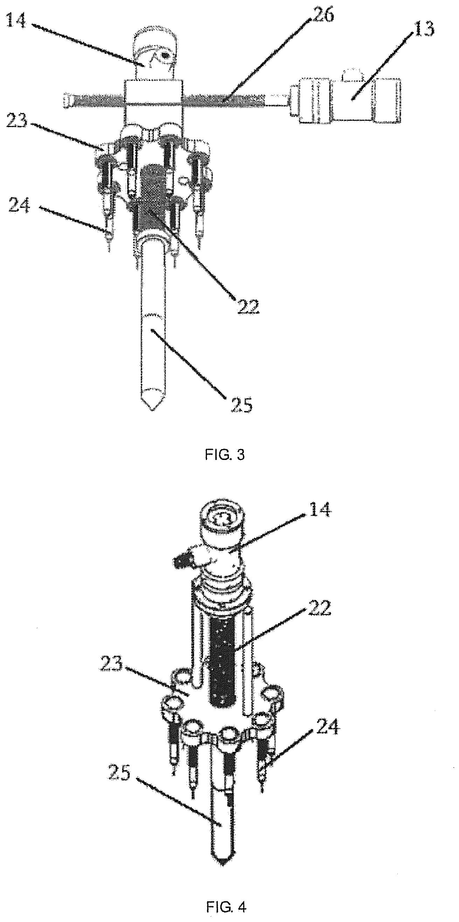

The central revolving table 10 is installed on the third layer, including a revolving guide rail 15, a revolving disc 16, a microelectrode probing system 3, a expanding mechanism and a vertical lifting mechanism (FIG. 2). The central revolving table 10 is provided with a circumferential revolving guide rail 15; the revolving disc 16 is disposed in the center of the revolving guide rail 15 and can slide along the revolving guide rail 15; and the revolving disc 16 is driven by a servo motor I 12. The revolving disc 16 is radially formed with a sliding chute 27. The microelectrode probing system 3 can slide in the sliding chute 27 under the control of the expanding mechanism. The expanding mechanism includes a servo motor II 13 and a screw II 26; the servo motor II 13 drives the screw II 26 to rotate; and the screw II 26 is in a threaded connection with the microelectrode probing system 3. The microelectrode probing system 3 can vertically move up and down under the control of the lifting mechanism; the lifting mechanism includes a servo motor III 14 and a screw III 22; the servo motor III 14 drives the screw III 22 to rotate; and the screw III 22 is in a threaded connection with the micro electrode probe system 3 (FIG. 3).

Four pieces of ballasting weights 9 are uniformly installed on the four layers.

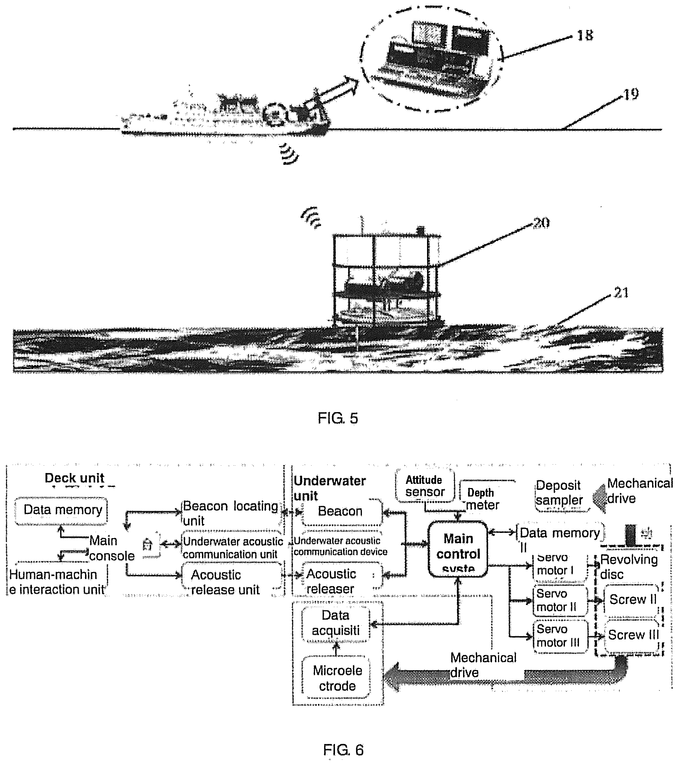

A control system for the long-term seabed-based multi-point in-situ observation system as shown in FIG. 5 and FIG. 6 includes a deck unit 18 and an underwater unit (underwater control and data acquisition control system) 20.

The deck unit 18 includes a main console, a data memory I, a human-machine interaction unit, a beacon locating unit, an underwater acoustic communication unit and an acoustic release unit, the main console is respectively connected with the data memory I, the human-machine interaction unit, the beacon locating unit, the underwater acoustic communication unit and the acoustic release unit.

The underwater control and data acquisition system 20 includes the main control system, the beacon 1, the underwater acoustic communication device 5, the acoustic releaser, a data memory II, the servo motor I 12, the revolving disc 16, the servo motor II 13, the screw II 26, the servo motor III 14, the screw III 22, the microelectrode probing system 3, the data acquisition unit, the deposit sampler 17, the depth meter and the altitude sensor. The main control system is respectively connected with the beacon 1, the underwater acoustic communication device 5, the acoustic releaser, the data memory II, the servo motor I 12, the servo motor II 13, the servo motor III 14, the data acquisition unit, the depth meter and the altitude sensor, wherein the servo motor I 12, the servo motor II 13 and the servo motor III 14 are respectively connected with the revolving disc 16, the screw II 26 and the screw III 22 to drive the microelectrode probing system 3 and the deposit sampler 17; and the microelectrode probing system 3 is connected with the data acquisition unit.

The beacon locating unit is in a wireless connection with the beacon 1, the underwater acoustic communication unit is in a wireless connection with the underwater acoustic communication device 5, and the acoustic release unit is in a wireless connection with the acoustic releaser.

The platform frame 11 of the observation system is made of 316L stainless steel material, with a diameter of 2m. The ship sends the observation system to point where the observation is to be carried out the acoustic releaser II is suspended at an end of a sheathed cable onboard the ship, and the acoustic releaser II is connected with the lifting ring 4. By releasing the sheathed cable, the observation system is lowered to the seabed surface; then, the acoustic releaser control unit sends a signal to open the hooks and safely separate from the seabed base, thus completing release.

After the underwater observation system is laid in place, an operator sends a command from the deck unit to the main control system of the underwater unit, to enable altitude, height and microelectrode multi-point detection. The revolving of the central revolving table 10, and the expanding and lifting of the microelectrode probing system 3 are respectively controlled through the servo motor I 12, the servo motor II 13 and the servo motor III 14, realizing the revolving location with any radius (0.2m≤R≤1m) in a range of 360°, and completing the controllable locating exploration/sampling of the electrode probe system.

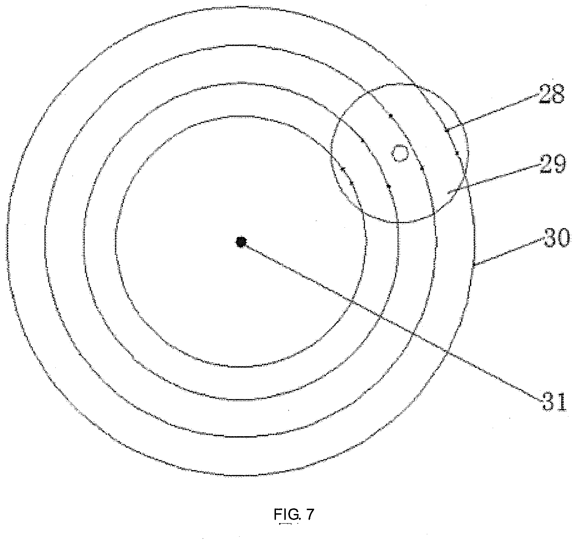

The detection method of the active diffusion field can be seen in FIG. 7. The microelectrode probing system 3 of the observation system performs multi-point detection in the detected zone 29 to obtain data of a plurality of detecting points 28. The diffusion field 30 is drawn according to the obtain value, and the location information of the diffusion point 31 is finally obtained.

After the observation is completed, the long-term seabed-based multi-point in-situ observation system 20 is recycled: the acoustic releaser receives the release signal sent by the deck unit 18, opens the hooks, and separates from the ballasting weights 9. Therefore, the long-term seabed-based multi-point in-situ observation system 20 is driven by the buoyant material 6 to float to the sea surface. After the long-term seabed-based multi-point in-situ observation system floats on the sea surface, the beacon sends a GPS real-time location to instruct ships on the sea surface to quickly lock the actual location and drifting direction of the long-term seabed-based multi-point in-situ observation system 20 and to smoothly complete tracking and salvage and recovery on the sea surface.

### Embodiment 2

This embodiment differs from embodiment 1 in that the microelectrode probing system 3 includes a base 23 and a static cone penetration test probe 25 and eight microelectrodes 24, wherein the static cone penetration test probe 25 is disposed in the center of the base 23; the weight microelectrodes 24 are uniformly arranged around the static cone penetration test probe 25; and the length of the static cone penetration test probe 25 is 5cm greater than the length of each one of the microelectrodes 24, as shown in FIG. 3-4.

The static cone penetration test probe 25 and the eight microelectrodes 24 are respectively connected to the data acquisition unit; the data acquisition unit is connected to the main control system; and the main control system completes the acquisition of data from the static cone penetration test probe 25 and the eight microelectrodes 24.

Repeated destruction tests are carried out on each one of microelectrode molds to obtain the limiting breaking strength of the respective microelectrodes 24 before the microelectrode probing system 3 is assembled. Providing that the minimum value of the limiting breaking strength of the mechanical structure of the respective microelectrode 24 is S, the threshold value of the static cone penetration test (CPT) can be set according to the value S. The threshold value of the static CPT can be set as 0.8S.

In the process that the microelectrode probing system 3 penetrates into the deposits, if the conical tip resistance of the static cone penetration test probe reaches 0.8S, the probe stops penetrating immediately, or penetrates into the limiting depth (for example 1m).

It should be understood that, for those ordinarily skilled in the art, improvements and changes can be made on the basis of the above description, and all the improvements and changes should fall within the protective scope of the Claims of the present invention.

## Claims

1. A long-term seabed-based multi-point in-situ observation system, **characterized by** comprising a platform frame (11), a buoyant material (6), an underwater acoustic communication device (5), a beacon (1), a monitoring chamber (2), a control chamber (7), a release control chamber (8), a central revolving table (10), ballasting weights (9) and a microelectrode probing system (3); wherein the platform frame (11) has a cylindrical main body with a total of four layers from the top down, the buoyant material (6), the underwater acoustic communication device (5) and the beacon (1) are installed on the first layer, the monitoring chamber (2), the control chamber (7) and the release control chamber (8) are installed on the second layer, the central revolving table (10) is installed on the third layer, and the ballasting weights (9) are installed on the fourth layer;
wherein the monitoring chamber (2) on the second layer is internally equipped with an attitude sensor and a depth meter, the control chamber (7) is internally equipped with an underwater control and data acquisition system, the release control chamber (8) is internally equipped with an underwater acoustic releaser;
wherein the central revolving table (10) is installed on the third layer, comprising a revolving guide rail (15), a revolving disc (16), the microelectrode probing system (3) and an expanding mechanism, the central revolving table (10) is provided with the circumferential revolving guide rail (15), the revolving disc (16) is disposed in the center of the revolving guide rail (15) and is capable of sliding along the revolving guide rail (15), the revolving disc (16) is coupled to be driven by a servo motor I (12); wherein the revolving disc (16) is radially formed with a sliding chute (27), the microelectrode probing system (3) is capable of sliding in the sliding chute (27) under the control of the expanding mechanism, the expanding mechanism comprises a servo motor II (13) and a screw II (26), the servo motor II (13) is configured to drive the screw II (26) to rotate, and the screw II (26) is in a threaded connection with a guide sleeve which is fixed on the microelectrode probing system (3).

2. The long-term seabed-based multi-point in-situ observation system according to claim 1, **characterized in that** the microelectrode probing system (3) is capable of moving up and down under the control of a lifting mechanism; the lifting mechanism comprises a servo motor III (14) and a screw III (22); the servo motor III (14) is configured to drive the screw III (22) to rotate; and the screw III (22) is in a threaded connection with a guide sleeve which is fixed on the microelectrode probing system (3).

3. The long-term seabed-based multi-point in-situ observation system according to claim 2, **characterized in that** the locating precision of the lifting mechanism is 1mm.

4. The long-term seabed-based multi-point in-situ observation system according to any one of claims 1-3, **characterized in that** the revolving disc (16) is also provided with a deposit sampler (17).

5. The long-term seabed-based multi-point in-situ observation system according to any one of claims 1-4, **characterized in that** the buoyant material (6) is designed to include 4-8 equal sections, and the combined shape and volume are matched with those of the platform frame (11).

6. The long-term seabed-based multi-point in-situ observation system according to claim 1-5, **characterized in that** the platform frame (11) of the observation system is made of the 316L stainless steel material.

7. The long-term seabed-based multi-point in-situ observation system according to any one of claims 1-6, **characterized in that** the microelectrode probing system (3) comprises a base (23) and a static cone penetration test probe (25) and eight microelectrodes (24) that are disposed on the base (23); the static cone penetration test probe (25) is disposed in the center of the base (23); the eight microelectrodes (24) are arranged around the static cone penetration test probe (25); the static cone penetration test probe (25) is set at a distance of 3-5cm from each one of the microelectrodes (24); the length of the conical tip of the static cone penetration test probe (25) is 4-8cm greater than the conical tip length of each one of the microelectrodes (24); and the eight microelectrodes (24) are respectively configured to detect the CH₄ , O₂, pH , Redox , H₂, H₂S, NO and NO₂ indexes.

8. A control system for the long-term seabed-based multi-point in-situ observation system according to any one of the claims 1-7, **characterized by** comprising a deck unit (18) and an underwater unit (20);
wherein the deck unit (18) comprises a main console, a data memory I, a human-machine interaction unit, a beacon locating unit, an underwater acoustic communication unit and an acoustic release unit, the main console is respectively connected with the data memory I, the human-machine interaction unit, the beacon locating unit, the underwater acoustic communication unit and the acoustic release unit;
wherein the underwater unit (20) comprises a main control system configured to be respectively connected with the beacon (1), the underwater acoustic communication device (5), the acoustic releaser, a data memory II, the servo motor I (12), the servo motor II (13), the data acquisition unit, the depth meter and the attitude sensor;
wherein the beacon locating unit is configured to be wirelessly connected with the beacon (1), the underwater acoustic communication unit is configured to be wirelessly connected with the underwater acoustic communication device (5), and the acoustic release unit is configured to be wirelessly connected with the acoustic releaser.

## Patentansprüche

1. Langfristiges In-Situ-Mehrpunkt-Beobachtungssystem mit Basis auf dem Meeresboden, **dadurch gekennzeichnet, dass** es einen Plattformrahmen (11), ein schwimmendes Material (6), eine Vorrichtung (5) zur akustischen Unterwasserkommunikation, eine Bake (1), eine Überwachungskammer (2), eine Steuerungskammer (7), eine Auslöse-Steuerungskammer (8), einen zentralen Drehtisch (10), Ballastgewichte (9) und ein Mikroelektroden-Sondensystem (3) umfasst, wobei der Plattformrahmen (11) einen zylindrischen Hauptkörper mit insgesamt vier Ebenen von oben nach unten aufweist, das schwimmende Material (6), die Vorrichtung (5) zur akustischen Unterwasserkommunikation und das Bake (1) auf der ersten Ebene installiert sind, die Überwachungskammer (2), die Steuerungskammer (7) und die Auslöse-Steuerungskammer (8) auf der zweiten Ebene installiert sind, der zentrale Drehtisch (10) auf der dritten Ebene installiert ist, und die Ballastgewichte (9) auf der vierten Ebene installiert sind,
wobei die Überwachungskammer (2) auf der zweiten Ebene im Inneren mit einem Lagesensor und einem Tiefenmesser ausgestattet ist, die Steuerungskammer (7) im Inneren mit einem Unterwasser-Steuerungs- und Datenerfassungssystem ausgestattet ist, die Auslöse-Steuerungskammer (8) im Inneren mit einer akustischen Unterwasser-Auslöser ausgestattet ist,
wobei der zentrale Drehtisch (10) auf der dritten Ebene installiert ist und eine Drehführungsschiene (15), eine Drehscheibe (16), das Mikroelektroden-Sondensystem (3) und einen Ausfahrmechanismus umfasst, der zentrale Drehtisch (10) mit der umlaufenden Drehführungsschiene (15) versehen ist, die Drehscheibe (16) in der Mitte der Drehführungsschiene (15) angeordnet ist und in der Lage ist, entlang der Drehführungsschiene (15) zu gleiten, die Drehscheibe (16) so gekoppelt ist, dass sie von einem Servomotor I (12) angetrieben wird, wobei die Drehscheibe (16) radial mit einer Gleitbahn (27) ausgebildet ist, das Mikroelektroden-Sondensystem (3) in der Lage ist, in der Gleitbahn (27) unter der Steuerung des Ausfahrmechanismus zu gleiten, der Ausfahrmechanismus einen Servomotor II (13) und eine Spindel II (26) umfasst, der Servomotor II (13) dazu ausgestaltet ist, die Spindel II (26) zur Drehung anzutreiben, und die Spindel II (26) in einer Gewindeverbindung mit einer Führungshülse steht, die an dem Mikroelektroden-Sondensystem (3) fixiert ist.

2. Langfristiges In-Situ-Mehrpunkt-Beobachtungssystem mit Basis auf dem Meeresboden nach Anspruch 1, **dadurch gekennzeichnet, dass** das Mikroelektroden-Sondensystem (3) in der Lage ist, sich unter der Steuerung eines Hubmechanismus auf- und abwärts zu bewegen, der Hubmechanismus einen Servomotor III (14) und eine Spindel III (22) umfasst, der Servomotor III (14) dazu ausgestaltet ist, die Spindel III (22) zur Drehung anzutreiben, und die Spindel III (22) in einer Gewindeverbindung mit einer Führungshülse steht, die an dem Mikroelektroden-Sondensystem (3) fixiert ist.

3. Langfristiges In-Situ-Mehrpunkt-Beobachtungssystem mit Basis auf dem Meeresboden nach Anspruch 2, **dadurch gekennzeichnet, dass** die Stellpräzision des Hubmechanismus 1 mm ist.

4. Langfristiges In-Situ-Mehrpunkt-Beobachtungssystem mit Basis auf dem Meeresboden nach einem der Ansprüche 1 - 3, **dadurch gekennzeichnet, dass** die Drehscheibe (16) auch mit einer Sedimentbeprobungsvorrichtung (17) versehen ist.

5. Langfristiges In-Situ-Mehrpunkt-Beobachtungssystem mit Basis auf dem Meeresboden nach einem der Ansprüche 1 - 4, **dadurch gekennzeichnet, dass** das schwimmende Material (6) so konstruiert ist, dass es 4 - 8 gleiche Abschnitte beinhaltet, und die kombinierte Gestalt und das kombinierte Volumen mit jenen des Plattformrahmens (11) abgestimmt sind.

6. Langfristiges In-Situ-Mehrpunkt-Beobachtungssystem mit Basis auf dem Meeresboden nach Anspruch 1 - 5, **dadurch gekennzeichnet, dass** der Plattformrahmen (11) des Beobachtungssystems aus dem Edelstahlmaterial 316L hergestellt ist.

7. Langfristiges In-Situ-Mehrpunkt-Beobachtungssystem mit Basis auf dem Meeresboden nach einem der Ansprüche 1 - 6, **dadurch gekennzeichnet, dass** das Mikroelektroden-Sondensystem (3) eine Basis (23) und eine Einstechprüfsonde (25) mit statischem Kegel und acht Mikroelektroden (24) umfasst, die an der Basis (23) angeordnet sind, die Einstechprüfsonde (25) mit statischem Kegel in der Mitte der Basis (23) angeordnet ist, die acht Mikroelektroden (24) um die Einstechprüfsonde (25) mit statischem Kegel herum angeordnet sind, die Einstechprüfsonde (25) mit statischem Kegel auf eine Distanz von 3 - 5 cm von jeder der Mikroelektroden (24) eingestellt ist, die Länge der konischen Spitze der Einstechprüfsonde (25) mit statischem Kegel 4 - 8 cm größer ist als die Länge der konischen Spitze jeder der Mikroelektroden (24), und die acht Mikroelektroden (24) jeweils dazu ausgestaltet sind, die Indizes für CH₄, O₂, pH, Redox, H₂, H₂S, NO und NO₂ zu erfassen.

8. Steuersystem für das langfristige In-Situ-Mehrpunkt-Beobachtungssystem mit Basis auf dem Meeresboden nach einem der Ansprüche 1 - 7, **dadurch gekennzeichnet, dass** es eine Deckeinheit (18) und eine Unterwassereinheit (20) umfasst,
wobei die Deckeinheit (18) eine Hauptkonsole, einen Datenspeicher I, eine Mensch-Maschine-Interaktionseinheit, eine Bake-Lokalisierungseinheit, eine akustische Unterwasser-Kommunikationseinheit und eine akustische Auslöseeinheit umfasst, die Hauptkonsole jeweils mit dem Datenspeicher I, der Mensch-Maschine-Interaktionseinheit, der Bake-Lokalisierungseinheit, der akustischen Unterwasser-Kommunikationseinheit und der akustischen Auslöseeinheit verbunden ist,
wobei die Unterwassereinheit (20) ein Hauptsteuersystem umfasst, das dazu ausgestaltet ist, jeweils mit der Bake (1), der Vorrichtung (5) zur akustischen Unterwasserkommunikation, der akustischen Auslösevorrichtung, einem Datenspeicher II, dem Servomotor I (12), dem Servomotor II (13), der Datenerfassungseinheit, dem Tiefenmesser und dem Lagesensor verbunden zu sein,
wobei die Bake-Lokalisierungseinheit dazu ausgestaltet ist, drahtlos mit der Bake (1) verbunden zu sein, die akustische Unterwasser-Kommunikationseinheit dazu ausgestaltet ist, drahtlos mit der Vorrichtung (5) zur akustischen Unterwasserkommunikation verbunden zu sein, und die akustische Auslöseeinheit dazu ausgestaltet ist, drahtlos mit der akustischen Auslösevorrichtung verbunden zu sein.

## Revendications

1. Système d'observation in-situ multipoint basé sur les fonds marins à long terme, **caractérisé en ce qu'**il comprend un cadre de plateforme (11), un matériau pouvant flotter (6), un dispositif de communication acoustique sous-marin (5), une balise (1), une chambre de surveillance (2), une chambre de commande (7), une chambre de commande de libération (8), une table tournante centrale (10), des poids de ballastage (9) et un système de sondage à microélectrodes (3) ; dans lequel le cadre de plateforme (11) a un corps principal cylindrique avec un total de quatre couches du haut vers le bas, le matériau pouvant flotter (6), le dispositif de communication acoustique sous-marin (5) et la balise (1) sont installés sur la première couche, la chambre de surveillance (2), la chambre de commande (7) et la chambre de commande de libération (8) sont installées sur la deuxième couche, la table tournante centrale (10) est installée sur la troisième couche, et les poids de ballastage (9) sont installés sur la quatrième couche ;
dans lequel la chambre de surveillance (2) sur la deuxième couche est équipée intérieurement d'un capteur d'attitude et d'un dispositif de mesure de profondeur, la chambre de commande (7) est équipée intérieurement d'un système de commande et d'acquisition de données sous-marin, la chambre de commande de libération (8) est équipée intérieurement d'un dispositif de libération acoustique sous-marin ;
dans lequel la table tournante centrale (10) est installée sur la troisième couche, comprenant un rail de guidage de révolution (15), un disque tournant (16), le système de sondage à microélectrodes (3) et un mécanisme d'expansion, la table tournante centrale (10) est pourvue du rail de guidage de révolution circonférentiel (15), le disque tournant (16) est disposé au centre du rail de guidage de révolution (15) et est capable de glisser le long du rail de guidage de révolution (15), le disque tournant (16) est accouplé pour être entraîné par un servomoteur I (12) ; dans lequel le disque tournant (16) est formé radialement avec une goulotte de glissement (27), le système de sondage à microélectrodes (3) est capable de glisser dans la goulotte de glissement (27) sous la commande du mécanisme d'expansion, le mécanisme d'expansion comprend un servomoteur II (13) et une vis II (26), le servomoteur II (13) est configuré pour entraîner la vis II (26) en rotation, et la vis II (26) est reliée par vissage à un manchon de guidage qui est fixé sur le système de sondage à microélectrodes (3).

2. Système d'observation in-situ multipoint basé sur les fonds marins à long terme selon la revendication 1, **caractérisé en ce que** le système de sondage à microélectrodes (3) est capable de se déplacer vers le haut et vers le bas sous la commande d'un mécanisme de levage ; le mécanisme de levage comprend un servomoteur III (14) et une vis III (22) ; le servomoteur III (14) est configuré pour entraîner la vis III (22) en rotation ; et la vis III (22) est reliée par vissage à un manchon de guidage qui est fixé sur le système de sondage à microélectrodes (3).

3. Système d'observation in-situ multipoint basé sur les fonds marins à long terme selon la revendication 2, **caractérisé en ce que** la précision de positionnement du mécanisme de levage est de 1 mm.

4. Système d'observation in-situ multipoint basé sur les fonds marins à long terme selon l'une quelconque des revendications 1 à 3, **caractérisé en ce que** le disque tournant (16) est également pourvu d'un échantillonneur de dépôt (17).

5. Système d'observation in-situ multipoint basé sur les fonds marins à long terme selon l'une quelconque des revendications 1 à 4, **caractérisé en ce que** le matériau pouvant flotter (6) est conçu de manière à inclure 4 à 8 sections égales, et la forme et le volume combinés correspondent à ceux du cadre de plateforme (11).

6. Système d'observation in-situ multipoint basé sur les fonds marins à long terme selon les revendications 1 à 5, **caractérisé en ce que** le cadre de plateforme (11) du système d'observation est constitué du matériau à base d'acier inoxydable 316L.

7. Système d'observation in-situ multipoint basé sur les fonds marins à long terme selon l'une quelconque des revendications 1 à 6, **caractérisé en ce que** le système de sondage à microélectrodes (3) comprend une base (23) et une sonde de test à pénétration statique de cône (25) et huit microélectrodes (24) qui sont disposées sur la base (23) ; la sonde de test à pénétration statique de cône (25) est disposée au centre de la base (23) ; les huit microélectrodes (24) sont agencées autour de la sonde de test à pénétration statique de cône (25) ; la sonde de test à pénétration statique de cône (25) est placée à une distance de 3 à 5 cm de chacune des microélectrodes (24) ; la longueur de l'extrémité conique de la sonde de test à pénétration statique de cône (25) est plus grande de 4 à 8 cm que la longueur de l'extrémité conique de chacune des microélectrodes (24) ; et les huit microélectrodes (24) sont respectivement configurées pour détecter les indices de CH₄, de O₂, de PH, de redox, de H₂, de H₂S, de NO et de NO₂.

8. Système de commande pour le système d'observation in-situ multipoint basé sur les fonds marins à long terme selon l'une quelconque des revendications 1 à 7, **caractérisé en ce qu'**il comprend une unité de pont (18) et une unité sous-marine (20) ;
dans lequel l'unité de pont (18) comprend une console principale, une mémoire de données I, une unité d'interaction homme-machine, une unité de positionnement de balise, une unité de communication acoustique sous-marine et une unité de libération acoustique, la console principale est respectivement connectée à la mémoire de données I, à l'unité d'interaction homme-machine, à l'unité de positionnement de balise, à l'unité de communication acoustique sous-marine et à l'unité de libération acoustique ;
dans lequel l'unité sous-marine (20) comprend un système de commande principal configuré pour être respectivement connecté à la balise (1), au dispositif de communication acoustique sous-marin (5), au dispositif de libération acoustique, à une mémoire de données II, au servomoteur I (12), au servomoteur II (13), à l'unité d'acquisition de données, au dispositif de mesure de profondeur et au capteur d'attitude ;
dans lequel l'unité de positionnement de balise est configurée pour être connectée par une liaison sans fil à la balise (1), l'unité de communication acoustique sous-marine est configurée pour être connectée par une liaison sans fil au dispositif de communication acoustique sous-marin (5), et l'unité de libération acoustique est configurée pour être connectée par une liaison sans fil au dispositif de libération acoustique.
